# EUROPEAN PATENT APPLICATION

(11) **EP 4 556 354 A1**
(43) Date of publication of application: **21.05.2025**
(21) Application number: 23210031.3
(22) Date of filing: 15.11.2023
(51) Int. Cl.: B62H 5/08

(54) **VEHICLE LOCKING OR UNLOCKING SYSTEM AND METHOD**

(71) Applicant: Mahle International GmbH, 70376 Stuttgart (DE)
(72) Inventor: Gonzalez de Juan, Carlos, 47006 Valladolid (ES); Lobos, Daniel, 47194 Valladolid (ES); Rakhnenko, Yaroslav, 34005 Palencia (ES); Rico Sanz, Alberto Jesus, 47007 Valladolid (ES)

(57) **Abstract**

A system (12) and method for locking or unlocking a vehicle (1), in particular an electric motor assisted bicycle is provided. The system (12) comprises at least one accelerometer or an inertial sensor (11), a display (9), and a control unit (13). The control unit (13) comprises a memory (16), the memory (16) storing a tap recognition algorithm, and a processor (17) for analyzing an output signal of the at least one accelerometer or inertial sensor (11) using the tap recognition algorithm to determine a tap action, and a counter (18) for counting the number of determined tap actions. When a sequence of values for the number of determined tap actions stored in the memory (16) corresponds to a predetermined sequence of values stored in the memory (16), the control unit (13) is configured to either send a signal for locking or unlocking a mechanical lock or electric lock or software lock arranged on the vehicle (1).

## Description

### TECHNICAL FIELD

The invention relates to a system for locking or unlocking a vehicle according to the preamble of independent claim 1.

The invention furthermore relates to a method for locking or unlocking a vehicle according to the preamble of independent claim 9.

### BACKGROUND ART

Electric vehicles, in particular electric bicycles, can be provided with means for locking to prevent theft or unauthorized use. This lock may be in the form of a mechanical lock e.g. in EP 2566746 A1, or it may be in the form of an electronic lock which is activated or deactivated via a mobile phone, e.g. in CN 104658092 A. Software locks are also known which deactivate the support from the motor via a smartphone application.

### SUMMARY OF THE INVENTION

It is one aim of the invention as defined in the independent claims 1 and 9 to provide a system and method respectively for locking or unlocking a vehicle, in particular an electric motor assisted bicycle, which does not require a smartphone or other additional locking or unlocking devices to lock or unlock the vehicle. The users may not always carry their smartphone or other locking or unlocking devices with them, or the locking or unlocking devices may be uncharged, misplaced, or stolen preventing the users from locking or unlocking and using the vehicle, in particular an electric motor assisted bicycle.

This is achieved according to a first aspect of the invention with a system for locking or unlocking a vehicle, in particular an electric motor assisted bicycle, the system comprising at least one accelerometer or an inertial sensor, a display, and a control unit. The at least one accelerometer or inertial sensor, the display, and the control unit are adapted for arrangement on the vehicle. The control unit comprises a memory, the memory storing a tap recognition algorithm, and a processor for analyzing an output signal of the at least one accelerometer or inertial sensor using the tap recognition algorithm to determine a tap action, and a counter for counting the number of determined tap actions. The display comprises means for indicating the number of determined tap actions. The system further comprising means for storing the value of the number of determined tap actions in the memory, and subsequently resetting the counter. The control unit is further configured such that, when a sequence of values for the number of determined tap actions stored in the memory corresponds to a predetermined sequence of values stored in the memory, the control unit sends a signal for locking or unlocking a mechanical lock or electric lock or software lock arranged on the vehicle.

The system can therefore be used to lock or unlock a vehicle without requiring an additional dedicated locking or unlocking device, or without using a smartphone or touchpad or touchscreen for entering a code.

The tap recognition algorithm can determine a tap action by calculating the gradient of the acceleration between two consecutive acceleration samples, such that if the gradient exceeds a predetermined threshold a single tap action is determined. The tap recognition algorithm can be defined by machine learning.

The predetermined sequence of values can be a locking or unlocking code, and the user can enter a first digit of the sequence of values by tapping on the vehicle in proximity to the accelerometer or the inertial sensor a number of times corresponding to the first digit of the code. The control unit registers the number of taps until the counter is reset and stores the value of registered taps in the memory. This is repeated until the full locking or unlocking code is entered. If the code is correctly entered the control unit will lock or unlock the vehicle.

In one embodiment the means for storing the value of the number of determined tap actions in the memory comprises providing a switch or button on the vehicle, wherein, when the switch or button is actuated the value of the number of determined tap actions is stored in the memory and the counter is reset.

Alternatively, the means for storing the value of the number of determined tap actions in the memory comprises the step of measuring the time period between two consecutive determined tap actions, wherein when the time period exceeds a predetermined length, the value of the number of determined tap actions is stored in the memory and the counter is reset.

Alternatively, the tap recognition algorithm can be configured to differentiate between a first predetermined tap action and a second different predetermined tap action, which actions include in particular a tap on a different part of the vehicle, for example a tap on different areas of the frame of the vehicle, wherein the means for storing the value of the number of determined tap actions in the memory comprises storing the value of the number of first determined tap actions in the memory and resetting the counter when a second predetermined tap action is determined. In this way a code can be entered by simply tapping on a first part of the vehicle a number of times corresponding to a first digit of the code, and subsequently tapping on a second part of the vehicle, different from the first part, to reset the counter and to save the first digit, and repeating this until the full code has been entered. No buttons are therefore required to enter a code.

In a further embodiment of the invention a vehicle, in particular an electric motor assisted bicycle, comprising a system according to the invention.

In one embodiment the vehicle, in particular an electric motor assisted bicycle, comprises a frame for supporting a front wheel and a rear wheel, the frame comprising a plurality of tubular sections and a human machine interface (HMI) arranged at least partly within one of the tubular sections, wherein the human machine interface comprises the display and a housing, which is rigidly attached to the tubular section, wherein the at least one accelerometer or inertial sensor is arranged within the housing of the human machine interface and arranged to sense an acceleration of the tubular section containing the human machine interface in the area of the human machine interface.

The frame can comprise a seat tube and a top tube and/or a down tube. Preferably the at least one accelerometer or inertial sensor is arranged in the top tube or the down tube.

The first predetermined tap action could be for example a tap on one side of the top tube or on the human machine interface, and the second predetermined tap action could be a tap on an adjacent or opposing side of the top tube. In a preferred embodiment the human machine interface is arranged at least partly in the top tube of the bicycle frame. The human machine interface can therefore be easily connected via a cable in the bicycle frame to a battery arranged on or in the frame, in particular in the down tube. The battery supplies power to an electric motor.

The control unit, which comprises the memory, the processor, and the counter, can be arranged in the down tube together with the battery. Alternatively, the control unit can be arranged within the battery housing located in the down tube of the vehicle, in particular the electric motor assisted bicycle. Alternatively, the control unit can be arranged within the housing of the human machine interface.

The display can for example be an LED display for displaying the number of determined tap actions.

In the case of a vehicle, in particular an electric motor assisted bicycle, in particular as described above, an/the electric motor is arranged for driving a wheel of the vehicle, and a/the battery connected thereto. The control unit is configured to enable the power to be supplied from the battery to the electric motor. The control unit can therefore also cut off power supplied by the battery to the motor so that no electrical assist power is provided.

In a further aspect of the invention, a method is provided for locking or unlocking a vehicle, in particular an electric motor assisted bicycle, comprising a system according to the invention. The method comprising the steps of:
A) tapping on a predetermined first area of the vehicle in proximity to the at least one accelerometer or inertial sensor a predetermined number of times,
B) carrying out one of the following to store the value of the number of determined tap actions in the memory and reset the counter:
   - tapping on the predetermined first area of the vehicle in proximity to the at least one accelerometer or inertial sensor after a predetermined time period between two consecutive determined tap actions has been exceeded, or
   - actuating a switch or button arranged on the vehicle, or
   - tapping on a predetermined second area of the vehicle, different to the predetermined first area, in proximity to the at least one accelerometer or inertial sensor,
C) repeating steps A) and B) to store a sequence of values of the number of determined tap actions in the memory,
D) wherein, when the sequence of values of the number of determined tap actions stored in the memory corresponds to the predetermined sequence of values, the control unit either locks or unlocks a mechanical lock or electric lock or software lock arranged on the vehicle.

Tapping in "proximity" is defined as tapping on a vehicle at a position is sufficiently close that the accelerometer or inertial sensor can register a movement or acceleration caused by the tap. Such a tapping could be a tapping on the human machine interface (HMI) and/or on the bicycle frame, in particular on the top tube of the bicycle frame, in proximity to the accelerometer or inertial sensor.

### BRIEF DESCRIPTION OF THE DRAWINGS

Embodiments will now be described by way of example only with reference to the accompanying drawings, in which:
- Figure 1: is a side view of a bicycle comprising a system according to the invention,
- Figure 2: is a top perspective view of part of the bicycle in figure 1,
- Figure 3: is a perspective view of part of the bicycle of figure 1 according to a first embodiment,
- Figure 4: is a perspective view of part of a bicycle according to a third embodiment, and
- Figure 5: is a flow diagram of the method according to the invention.

### DETAILED DESCRIPTION

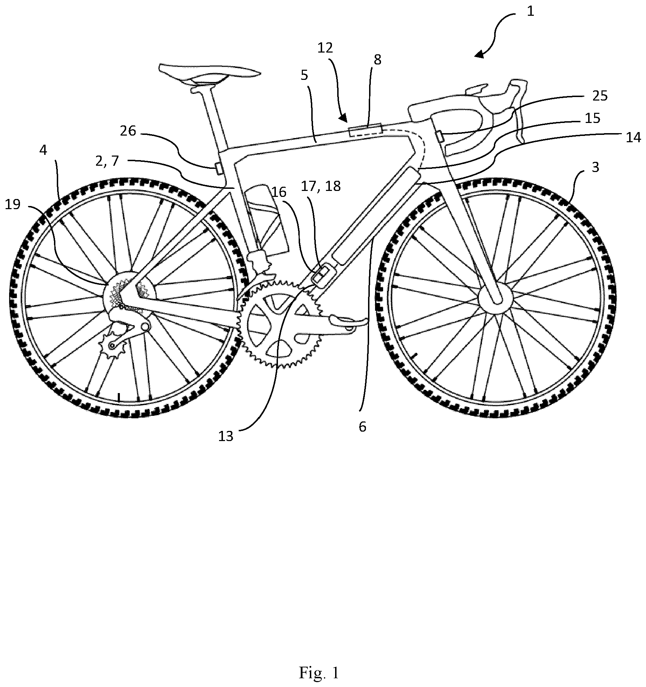

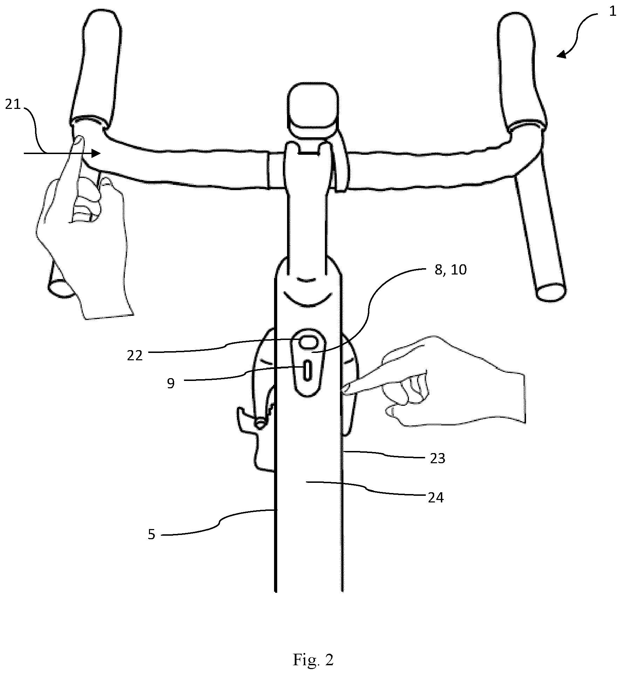

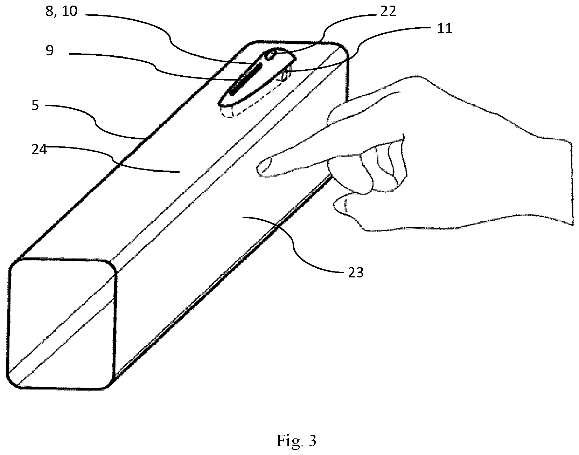

Referring now to figures 1 to 4. Figure 1 illustrates how the invention can be applied in a bicycle 1, in particular an electrically assisted bicycle 1, according to a first embodiment. The invention can however also be applied to other vehicles e.g. an electric scooter or an electric wheelchair. The electric motor assisted bicycle 1 comprises a frame 2 for supporting a front wheel 3 and a rear wheel 4. The frame 2 comprising a plurality of tubular sections 5, 6, 7 and a human machine interface (HMI) 8 arranged at least partly within one of the tubular sections 5, 6, 7, wherein the human machine interface 8 comprises a display 9 and a housing 10 as shown in figure 2. The housing 10 is rigidly attached to the tubular section 5, 6, 7. At least one accelerometer or inertial sensor 11 is arranged on or within the housing 10 as shown in figure 3 and arranged to sense an acceleration of the tubular section containing the human machine interface 8 in proximity to the human machine interface 8. It is also possible to arrange the accelerometer or inertial sensor 11 away from the human machine interface 8, it must however have a rigid connection to the vehicle frame 2.

The frame can comprise a seat tube 7 and a top tube 5 and/or a down tube 6. Preferably the accelerometer or inertial sensor is arranged within the HMI housing 10 in the top tube 5 or the down tube 6.

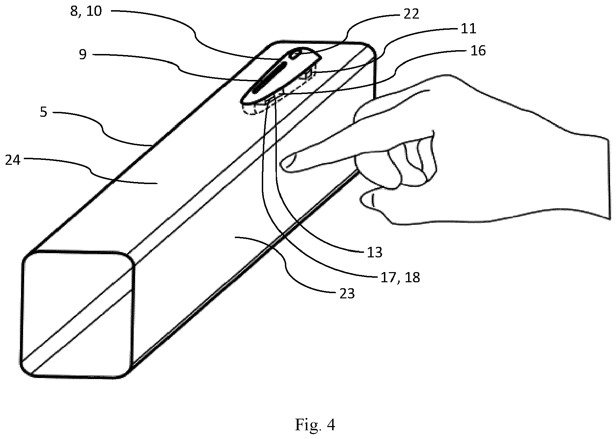

The display 9 and the accelerometer or inertial sensor 11 form part of a system 12 according to the invention for locking or unlocking a vehicle, in this case for locking or unlocking the electrically assisted bicycle 1. In this context, "locking" or "unlocking" can refer to either a mechanical, or electric lock, or a software lock. The system 12 further comprises a control unit 13. The at least one accelerometer or inertial sensor 11, the display 9, and the control unit 13 are arranged on the vehicle 1. In the first embodiment as shown in figure 1 the control unit 13 is arranged in the downtube 6 together with a battery 14. In a second embodiment the control unit 13 can be arranged within the battery housing (not shown). In these cases, the control unit 13 is connected to the HMI 8 via at least one cable 15. Alternatively, in a third embodiment the control unit 13 can be arranged within the housing 10 of the HMI 8 as shown in figure 4.

The control unit 13 comprises a memory 16, the memory storing a tap recognition algorithm, and a processor 17 for analyzing an output signal of the at least one accelerometer or inertial sensor 11 using the tap recognition algorithm to determine a tap action, and a counter 18 for counting the number of determined tap actions.

The display 9 comprises means for indicating the number of determined tap actions. The display 9 can for example be an LED display or any other type of display for displaying the number of determined tap actions.

The system 12 also comprises means for storing the value of the number of determined tap actions in the memory 16, and subsequently resetting the counter 18. The control unit 13 is further configured such that, when a sequence of values for the number of determined tap actions stored in the memory corresponds to a predetermined sequence of values stored in the memory, the control unit 13 sends a signal for unlocking or locking a mechanical lock or electric lock or software lock arranged on the vehicle.

The system 12 can therefore be used to lock or unlock a vehicle without requiring an additional dedicated locking or unlocking device, or without using a smartphone, touchpad or touchscreen for entering a code.

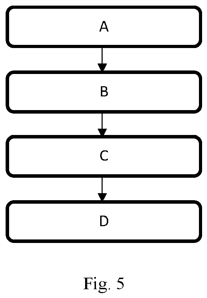

Fig. 5 shows the steps of a method for locking or unlocking a vehicle 1, in particular an electric motor assisted bicycle, having such a system 12. The method comprising the steps of:
A) tapping on a predetermined first area 23 of the vehicle 1 in proximity to the at least one accelerometer or inertial sensor 11 a predetermined number of times. Fig. 3 illustrates by way of example, that the predetermined first area 23 can be a lateral side of the top tube 5, whereby the accelerometer or inertial sensor 11 is arranged in the housing 10 of the human machine interface 8.
B) carrying out one of the following steps i. or ii. or iii. to store the value of the number of determined tap actions in the memory 16 and reset the counter 18:
   i. tapping on the predetermined first area 23 of the vehicle 1 in proximity to the at least one accelerometer or inertial sensor after a predetermined time period between two consecutive determined tap actions has been exceeded, or
   ii. actuating a switch or button 22 arranged on the vehicle 1. The means for storing the value of the number of determined tap actions in the memory 16 thus comprises providing a switch or button 22 on the vehicle, wherein, when the switch or button 22 is actuated the value of the number of determined tap actions is stored in the memory 16 and the counter 18 is reset. The switch or button 22 is preferably arranged as part of the human machine interface 8. Or
   iii. tapping on a predetermined second area 24 of the vehicle 1, different to the predetermined first area 23, in proximity to the at least one accelerometer or inertial sensor 11. By way of example the predetermined second area 24 can be a top surface 24 of the top tube 5, as indicated in figures 2 and 3.
C) repeating steps A) and B) to store a sequence of values of the number of determined tap actions in the memory 16,
D) wherein, when the sequence of values of the number of determined tap actions stored in the memory 16 corresponds to the predetermined sequence of values, the control unit 13 either locks or unlocks a mechanical lock or electric lock or software lock arranged on the vehicle 1.

The predetermined sequence of values can be a locking or unlocking code, and the user can enter the first digit of the sequence of values by tapping on the vehicle in proximity to the accelerometer or the inertial sensor 11 a number of times corresponding to the first digit of the code. The control unit 13 registers the number of taps until the counter is reset and stores the value of registered taps in the memory 16. This is repeated until the full locking or unlocking code is entered. If the code is correctly entered the control unit will lock or unlock the vehicle.

In a preferred embodiment the human machine interface 8 containing the accelerometer or inertial sensor 11 is arranged at least partly in the top tube 5 of the bicycle frame 2. The human machine interface 8 can therefore be easily connected via a cable 15 in the bicycle frame 2 to a battery 14 arranged in the down tube. The control unit can be arranged within the HMI housing 10, or within the down tube 6 and is electrically connected to the battery 14 and the accelerometer or inertial sensor 11. The battery 14 supplies power to the electric motor 19, whereby the control unit 13 is configured to control the power supplied from the battery 14 to the electric motor 19. The control unit 13 can therefore also cut off power supplied by the battery 14 to the motor 19 so that no electrical assist power is provided.

### LIST OF REFERENCE NUMERALS

1. Vehicle
2. Frame
3. Front wheel
4. Rear wheel
5. Top tube
6. Down tube
7. Seat tube
8. Human machine interface
9. Display
10. Housing
11.Accelerometer/inertial sensor
12. System
13. Control unit
14. Battery
15. Cable
16. Memory
17. Processor
18. Counter
19. Electrical assist motor
20. Pedals
21. Lateral direction
22. Switch
23. Predetermined first area
24. Predetermined second area
25. Front light
26. Rear light

## Claims

1. A system (12) for locking or unlocking a vehicle (1), in particular an electric motor assisted bicycle, the system (12) comprising at least one accelerometer or an inertial sensor (11), a display (9), and a control unit (13),
- wherein the at least one accelerometer or inertial sensor (11), the display (9), and the control unit (13) are adapted for arrangement on the vehicle (1),
- the control unit (13) comprises a memory (16), the memory (16) storing a tap recognition algorithm, and a processor (17) for analyzing an output signal of the at least one accelerometer or inertial sensor (11) using the tap recognition algorithm to determine a tap action, and a counter (18) for counting the number of determined tap actions,
- wherein the display (9) comprises means for indicating the number of determined tap actions,
- the system further comprising means for storing the value of the number of determined tap actions in the memory (16), and subsequently resetting the counter (18),
- wherein, when a sequence of values for the number of determined tap actions stored in the memory (16) corresponds to a predetermined sequence of values stored in the memory (16), the control unit (13) is configured to send a signal for locking or unlocking a mechanical lock or electric lock or software lock arranged on the vehicle.

2. A system (12) according to claim 1, **characterized in that** the means for storing the value of the number of determined tap actions in the memory (16) comprises the step of measuring the time period between two consecutive determined tap actions, wherein when the time period exceeds a predetermined length, the value of the number of determined tap actions is stored in the memory (16) and the counter (18) is reset.

3. A system (12) according to claim 1, **characterized in that** the means for storing the value of the number of determined tap actions in the memory comprises providing a switch or button (22) on the vehicle (1), wherein, when the switch or button (22) is actuated the value of the number of determined tap actions is stored in the memory (16) and the counter (18) is reset.

4. A system (12) according to claim 1, **characterized in that** the tap recognition algorithm is configured to differentiate between a first predetermined tap action and a second different predetermined tap action, which actions include in particular a tap on a different part of the vehicle (1), wherein the means for storing the value of the number of determined tap actions in the memory (16) comprises storing the value of the number of first determined tap actions in the memory (16) and resetting the counter (18) when a second predetermined tap action is determined.

5. A vehicle (1), in particular an electric motor assisted bicycle, comprising a system (12) according to one of the preceding claims.

6. A vehicle (1), in particular an electric motor assisted bicycle, according to claim 5, comprising a frame (2) for supporting a front wheel (3) and a rear wheel (4), the frame (2) comprising a plurality of tubular sections (5, 6, 7) and human machine interface (8) arranged at least partly within one of the tubular sections (5, 6, 7), wherein the human machine interface (8) comprises the display (9) and a housing (10), which is rigidly attached to the tubular section (5, 6, 7), wherein the at least one accelerometer or inertial sensor (11) is arranged within the housing (10) of the human machine interface (8) and arranged to sense an acceleration of the tubular section (5, 6, 7) containing the human machine interface (8) in the area of the human machine interface (8).

7. A vehicle (1), in particular an electric motor assisted bicycle, according to claim 6, **characterized in that** the control unit (13) is arranged within the housing (10) of the human machine interface (8).

8. A vehicle (1), in particular an electric motor assisted bicycle, according to one of the claims 5 to 7, further comprising an electric motor (19) arranged for driving a wheel (3, 4) of the vehicle (1), and a battery (14) connected thereto, wherein the control unit (13) is configured to enable power to be supplied from the battery (14) to the electric motor (19).

9. A method for locking or unlocking a vehicle (1), in particular an electric motor assisted bicycle, comprising a system according to one of the preceding claims, comprising the steps of:
A) tapping on a predetermined first area (23) of the vehicle (1) in proximity to the at least one accelerometer or inertial sensor (11) a predetermined number of times,
B) carrying out one of the following to store the value of the number of determined tap actions in the memory (16) and reset the counter (18):
- tapping on the predetermined first area of the vehicle (1) in proximity to the at least one accelerometer or inertial sensor (11) after a predetermined time period between two consecutive determined tap actions has been exceeded, or
- actuating a switch or button (22) arranged on the vehicle (1), or
- tapping on a predetermined second area (24) of the vehicle (1), different to the predetermined first area (23), in proximity to the at least one accelerometer or inertial sensor (11),
C) repeating steps A) and B) to store a sequence of values of the number of determined tap actions in the memory (16),
D) wherein, when the sequence of values of the number of determined tap actions stored in the memory (16) corresponds to the predetermined sequence of values, the control unit (13) either locks or unlocks a mechanical lock or electric lock or software lock arranged on the vehicle (1).
